Europäisches Patentamt

European Patent Office

Office européen des brevets

(19)

(11) **EP 0 421 566 B1**

(12) **EUROPEAN PATENT SPECIFICATION**

(45) Date of publication and mention
of the grant of the patent:
**27.12.1996 Bulletin 1996/52**

(51) Int Cl.[6]: **G06F 17/17**

(21) Application number: **90302744.9**

(22) Date of filing: **14.03.1990**

(54) **System for generating approximate curves and system for memorizing curves**

Erzeugungssystem von Approximationskurven und Kurvenspeicherung

Système pour générer des approximations de courbes et système pour mémoriser des courbes

(84) Designated Contracting States:
**DE FR GB**

(30) Priority: **04.10.1989 JP 259663/89**

(43) Date of publication of application:
**10.04.1991 Bulletin 1991/15**

(73) Proprietor: **Stanley Electric Co., Ltd.**
**Meguro-ku Tokyo 153 (JP)**

(72) Inventors:
• **Hosaka, Mamoru**
**Tokyo 154 (JP)**
• **Saitoh, Tsuyoshi**
**Sakae-ku, Yokohama-shi, Kanagawa 247, (JP)**
• **Kushimoto, Takuya**
**Yokohama-shi, Kanagawa 222 (JP)**

(74) Representative: **Calderbank, Thomas Roger et al**
**MEWBURN ELLIS**
**York House**
**23 Kingsway**
**London WC2B 6HP (GB)**

(56) References cited:
EP-A- 0 191 134          WO-A-84/02993
GB-A- 2 203 613          US-A- 4 774 685

• ACM TRANSACTIONS ON GRAPHICS,
ASSOCIATION FOR COMPUTING MACHINERY,
NEW YORK, US vol. 2, no. 1, January 1983, pages
1 - 31; T.PAVLIDIS: 'CURVE FITTING WITH
CONIC SPLINES'
• IEEE COMPUTERS GRAPHICS AND
APPLICATIONS, IEEE COMPUTER SOCIETY
PRESS vol. 9, no. 2, March 1989, LOS ALAMITOS,
CA, US pages 58 - 66; R.A.FOWELL: 'FASTER
PLOTS BY FAN DATA-COMPRESSION'
• ELECTRONIQUE APPLICATIONS, SOCIETE
PARISIENNE D'EDITION no. 46, February 1986,
PARIS, FRANCE pages 75 - 79; B.VELLIEUX:
'APROXIMATION DE FONCTIONS
NUMERIQUES: LA SYNTHESE PAR SEGMENTS
SUCCESSIFS'
• IEEE COMPUTER GRAPHICS AND
APPLICATIONS, IEEE COMPUTER SOCIETY
PRESS vol. 7, no. 4, April 1987, NEW YORK, US
pages 45 - 58; L.PIEGL: 'INTERACTIVE DATA
INTERPOLATION BY RATIONAL BEZIER
CURVES'

**Description**

This invention relates to a system for generating approximate curves and for memorizing the curves. Furthermore, it relates to a system to get a minimum number of curves which approximate given sequence of points and to memorize the resulting curves efficiently.

As a conventional system to get curves from given sequence of sampled points, a system in which the points are connected by straight lines and the curves are represented by polygonal line is well known.

Another system in which a sequence of points is divided into some groups and points of the each group are represented by circles, ellipses or parabolas is also well known.

Furthermore, instead of using circles, ellipses or parabolas, a system using cubic polynomial, B spline curves or Bezier curves is well known.

These polygonal line or curves are memorized in the form of parametric formes, or in the form of many points data after interpolating the points on the curves.

The conventional systems using polygonal line, circles, ellipses or parabolas have problems of lacking smoothness and are only used for low level application.

On the contrary, the conventional systems using cubic polynomial, B spline curves or Bezier curves have smoothness and are used for high level application.

However, as cubic polynomial, B spline curves or Bezier curves cannot correctly represent conics, there are problems that they cannot represent exactly arc such as character fonts designed basically by using a compass. Also, as the cubic polynomial cannot solve analytically, in general, there are problems that calculation is quite complex.

On the other hand, when the approximate curves are memorized in control points scheme, as range of control point differs from that of given points, there are problems that handling on memory is very complicated.

When the approximate curves are memorized in the form of the many points data, as the amount of data becomes huge, there are problems that large capacity of memories is required.

The article by L. Piegl in IEEE Computer Graphics and Applications (1987) APRIL, VOL. 7, N°4, pg. 45-58 : "Interactive data interpolation by rational Bezier curves" P45 gives algorithms for interpolation using conic rational Bezier curves.

GB 2203613A discloses an algorithm for approximating a curve by using Cubic Bezier curves and for storing it.

The object of the invention is to provide a system for generating approximate curves and a system for memorizing the curves so as to solve the above mentioned problems.

Accordingly, in a first aspect, the invention provides an apparatus for generating an image comprising:

an input device for inputting a sequence of points of an image;
a processor for generating approximate curves fitting that sequence of points, comprising,

(a) an initial segment generating means which selects adjacent three points and finds a rational Bezier curve of degree two having as control points the two end points among the adjacent three points and the node of tangents at these two points and which transits the middle one point of the three adjacent points;

characterized in that

(i) the processor further comprises

(a) an approximate segment generating means which extends the rational Bezier curver of degree two, finds the outermost point to which distance from the curve is within a predetermined allowance value, finds a provisional rational Bezier curve of degree two which gives minimal total distance between each point until the outermost point and the curve, repeats said process to extend the rational Bezier curve of degree two and to find a new provisional rational Bezier curve of degree two, and then, finds a final rational Bezier curve of degree two which approximates the points until the outermost point to which distance from the curve is within the predetermined allowance value, and
(b) a repeat control means which repeats said initial segment generating step and said approximate segment generating step regarding to the remaining points and stops repeating when there is no remaining point; and

(ii) the apparatus further comprises

a memory for memorizing curves by which rational Bezier curves of degree two from the first to the X-th being tangent-continuous thereof are memorized, said memory being arranged to

(a) memorize a tangent at a control point P10 which is one side end of the first rational Bezier curve of degree two,
(b) memorize a control point PX2 which is another side end of the X-th rational Bezier curve of degree two,
(c) memorize a control point Pi0 which is one side end of the i-th ($1 \leq i \leq X$) rational Bezier curve of degree two, and
(d) memorize the following camber vector $\underline{b}i$,

$$\underline{b}i = (\underline{P}i1 - (\underline{P}i0 + \underline{P}i2)/2) Wi / (1 + Wi)$$

whereby, $\underline{P}i1$ is a control point of a node of tangents at $\underline{P}i0$ and $\underline{P}i2$, Wi is the weight of i'-th rational Bezier curve of degree two; and an output device for outputting the image.

In a second aspect, the invention provides a method of generating an image comprising:

inputting a sequence of points of an image;
generating approximate curves fitting that sequence of points, by

(a) selecting adjacent three points and finding a rational Bezier curve of degree two having as control points the two end points among the adjacent three points and the node of tangents at these two points and which transits the middle one point of the three adjacent points;

characterized in that

(i) said step of generating approximate curves includes

(a) extending the rational Bezier curver of degree two, finding the outermost point to which distance from the curve is within a predetermined allowance value, finding a provisional rational Bezier curve of degree two which gives minimal total distance between each point until the outermost point and the curve, and repeating said process to extend the rational Bezier curve of degree two and to find a new provisional rational Bezier curve of degree two, and then, finding a final rational Bezier curve of degree two which approximates the points until the outermost point to which distance from the curve is within the predetermined allowance value, and
(b) repeating said initial segment generating step and said approximate segment generating step regarding to the remaining points and stopping repeating when there is no remaining point; and

(ii) the method further includes memorizing curves by which rational Bezier curves of degree two from the first to the X-th being tangent-continuous thereof are memorized by

(a) memorizing a tangent at a control point P10 which is one side end of the first rational Bezier curve of degree two,
(b) memorizing a control point PX2 which is another side end of the X-th rational Bezier curve of degree two,
(c) memorizing a control point Pi0 which is one side end of the i-th ($1 \leq i \leq X$) rational Bezier curve of degree two, and

(d) memorizing following camber vector $\underline{b}i$,

$$\underline{b}i = (\underline{P}i1 - (\underline{P}i0 + \underline{P}i2)/2)\, Wi\,/\,(1 + Wi)$$

whereby, $\underline{P}i1$ is a control point of a node of tangents at $\underline{P}i0$ and $\underline{P}i2$, Wi is the weight of i-th rational Bezier curve of degree two; and outputting the image.

Preferred features of the invention will now be described. A quadratic rational Bezier curve is generally expressed as follows,

$$\bar{r}(T) = \frac{(1-T)^2\, w_o \underline{P}_o + 2T(1-T)\, w_1 \underline{P}_1 + T^2 w_2 \underline{P}_2}{(1-T)^2 w_o + 2T(1-T)\, w_1 + T^2 w_2} \tag{1}$$

here, T ($0 \leq T \leq 1$) is a parameter, $\underline{P}_o$, $\underline{P}_1$, $\underline{P}_2$ are position vectors at control points, and $W_o$, $W_1$, $W_2$ are weights given to each control point.

When $W_o \cdot W_2 > 0$, set $\omega = (W_o/W_2)^{0.5}$ to give parameter transformation of $T = \omega t\,/\,((\omega-1)t+1)$, above quotation (1) can be expressed as follows.

$$\bar{r}(t.W) = \frac{(1-t)^2 \underline{P}_o + 2t(1-t)\, W\underline{P}_1 + t^2 \underline{P}_2}{(1-t)^2 + 2t(1-t)\, W + t^2} \tag{2}$$

here W is weight and $W = w_1/\,w_o \cdot w_2)^{0.5}$

By the processes, not only the approximate curves can be easily generated, but also the member of curves is minimized.

The system of the invention doesn't memorize each control point $\underline{P}_o$, $\underline{P}_1$, $\underline{P}_2$ and weight W of plural of quadratic rational Bezier curves being tangent-continuous thereof, but memorize tangent at one end control point of the first quadratic rational Bezier curve, the other end's control point of the last quadratic rational Bezier curve, the one end control point of each quadratic rational Bezier curve and said camber vector.

Instead of the control point $P_1$ whose value is likely to largely differ from that of other points $P_o$, $P_2$, said camber vector which isn't likely to differ as the above mentioned is memorized to ease the process in memories.

It, also can reduce the data amount.

<u>In the drawings:</u>

Fig. 1A and Fig. 1B are flowcharts according to an embodiment of this invention.
Fig. 2 is a diagram of input sequence of points.
Fig. 3 is a diagram showing the principles of generating the quadratic rational Bezier curve from three points.
Fig. 4 is a diagram showing the extension of quadratic rational Bezier curve.

Fig. 5 is a diagram of approximated character font generated by the system for generating curves of this invention.

Fig. 6 is a diagram showing the principles of the system for memorizing curves of this invention.

Fig. 7 is a block diagram of a computer system by which the system for generating curves and the system for memorizing curves of this invention are embodied.

This invention will be described in more detail in accordance with the preferred embodiments illustrated. It is to be noted that this invention is not limited by these embodiments.

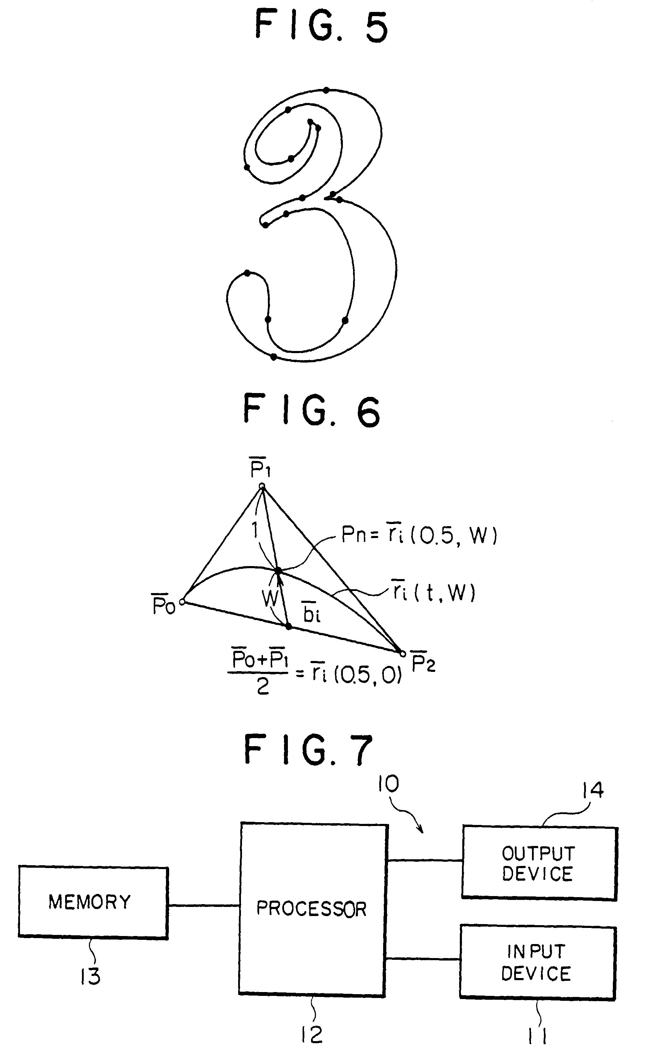

The system for generating curves and the system for memorizing curves of this invention are embodied by a computer system 10 shown in the Fig. 7.

When data of a sequence of points are input by an input device 11, a processor 12 computes a quadratic rational Bezier curves approximating to the curve fitting the sequence of points. The quadratic rational Bezier curves are memorized by a memory 13 and are output by an output device 14.

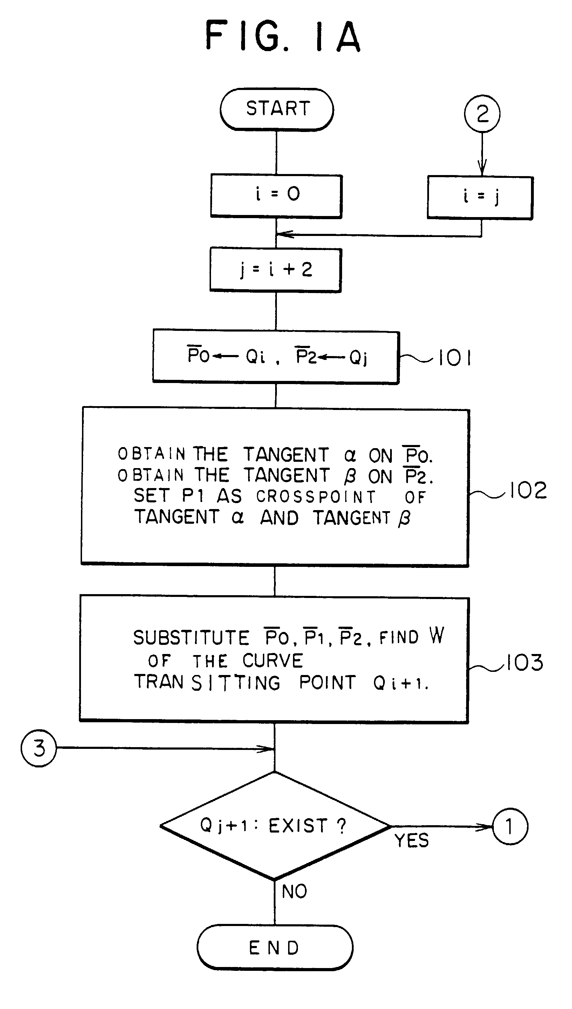

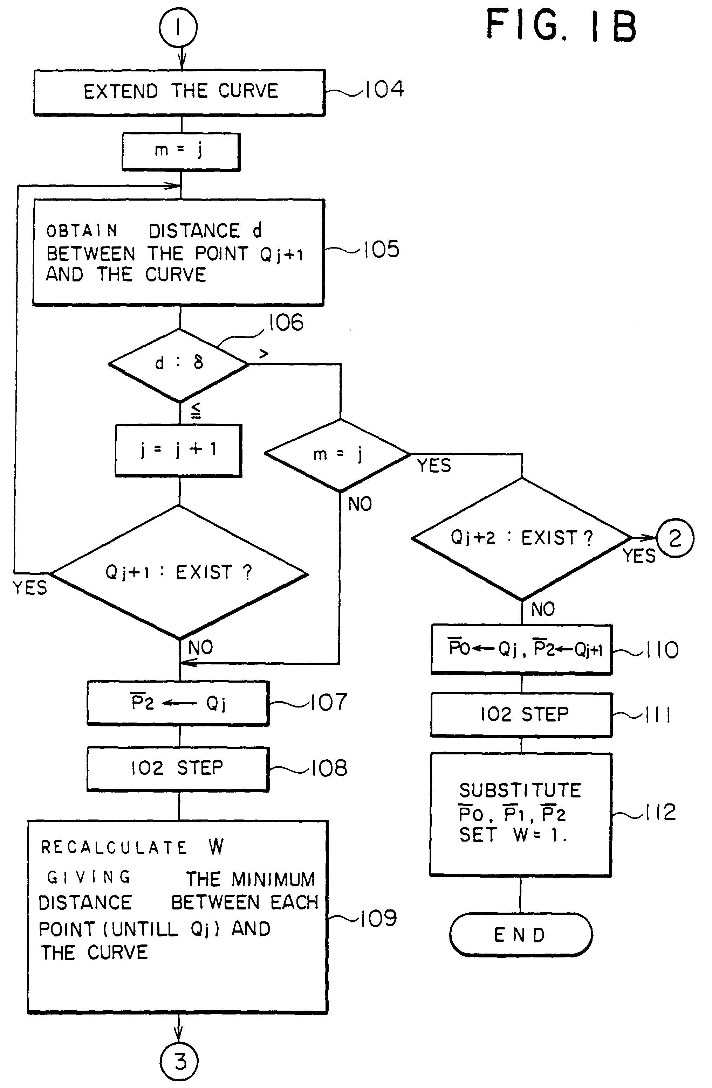

The flowcharts of Fig. 1A and Fig. 1B show the operation of the processor 12 computing the quadratic rational Bezier curves.

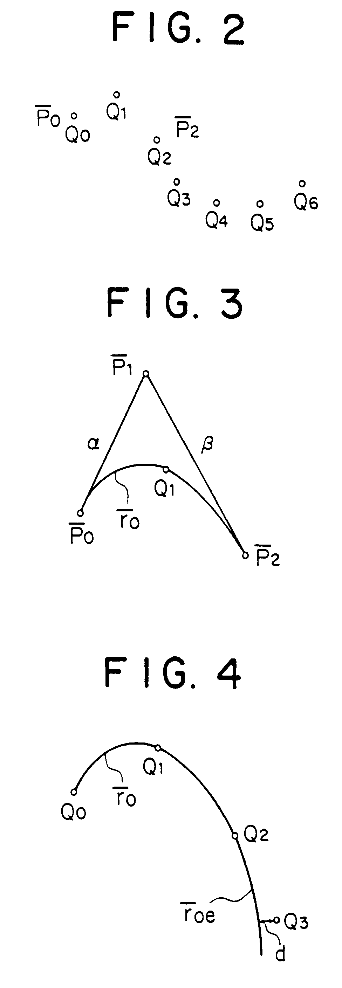

In step 101, when an input sequence of points are $Q_0$, $Q_1$, $Q_2$, ... , the point $Q_0$ is set as a control point $\bar{P}_0$ and the point $Q_2$ is set as a control point $\bar{P}_2$ as shown in Fig. 2.

In step 102, a tangent $\alpha$ on the control point $\bar{P}_0$ and a tangent $\beta$ on the control point $\bar{P}_2$ are obtained. Then, a cross point of the tangent $\alpha$ and the tangent $\beta$ is obtained and is set as a control point $\bar{P}_1$ as shown in Fig. 3.

Conventional process for finding tangent may be used as the process to find the tangent $\alpha$ and the tangent $\beta$.

In step 103, the control point $\bar{P}_0$, $\bar{P}_1$ and $\bar{P}_2$ are substituted into the aforesaid expression (2) to find the weight W which make the curve transit the point $Q_1$.

Thus, a quadratic rational Bezier curve fitting the point $Q_0$, $Q_1$, $Q_2$ is found. The abovementioned process is an inital segment generating step.

In step 104, the quadratic rational Bezier curve $\bar{r}_0$ is extended as shown in Fig. 4. That is to say, as there is a property that a quadratic rational Bezier curve $\bar{r}(t, -W)$ represents an extended portion of the quadratic rational Bezier curve $\bar{r}(t, W)$ with reverse sign of the weight W, this step finds the extended portion $\bar{r}_{oe}$ of the quadratic rational Bezier curve $\bar{r}_0$ by using said property.

In step 105, a distance d between the point $Q_3$ and the extended portion $\bar{r}_{oe}$ is calculated.

In step 106, the distance d and the user-specified tolerance $\delta$ are compared.

If the distance d is not larger than the user-specified tolerance $\delta$, then back to the aforesaid step 105 and calculate the distance d between the next point $Q_4$ and the extended portion $\bar{r}_{oe}$. This process is repeated until the distance d becomes larger than the user-specified tolerance $\delta$.

When the distance d becomes larger than the user-specified tolerance $\delta$ at the point $Q_{k+1}$, jump to step 107.

In step 107, the point $Q_k$ is set as a control point $\bar{P}_2$ and in next step 108, a control point $\bar{p}_1$ is obtained by the same process as aforesaid step 102.

In step 109, re-calculate the weight W which minimize a mean distance between the curve and each point by changing the weight W in the expression (2) to calculate the mean value of each distance between the curve and the points $Q_1$ - $Q_k$.

Thus, new quadratic rational Bezier curve $\bar{r}_0$ approximating the curve fitting points $Q_0$ - $Q_k$ is got.

Then, back to the step 104, extend the aforesaid quadratic rational Bezier curve $\bar{r}_0$ and repeat the steps 105 - 109.

When new quadratic rational Bezier curve $\bar{r}_o$ fitting the points $Q_0$ - $Q_L$ is got and a distance d between an extended portion of the curve and the point $Q_{L+1}$ becomes larger than the user-specified tolerance $\delta$, the quadratic rational Bezier curve at that time is set as the final approximate curve fitting the points Qo - QL. The abovementioned process is an approximate segment generating step.

After that, the points $Q_L$, $Q_{L+1}$, $Q_{L+2}$ are taken out and the aforesaid steps 101 - 109 are repeated. When any point to be taken out is no longer existing, the process is terminated. This is a repeat control step.

If only one point to be taken out exists as the last point, the point just before the said last point is set as a control point $\bar{P}_0$ and the last point is set as a control point $\bar{P}_2$ (step 110), and the control point $\bar{P}_1$ is found by the same process as the step 102 (step 111), and then, the last curve is got by using these control points P0, P2, P1 and the weight W = 1 (step 112).

Thus, the quadratic rational Bezier curves $\bar{r}_0$, $\bar{r}_1$, $\bar{r}_2$, $\bar{r}_3$, ... which approximate the curve fitting the input sequence of points $Q_0$, $Q_1$, $Q_2$ ... are got.

Fig. 5 shows an example of approximate curves which are got by abovementiond process and represent a sequence of points for character font.

To memorize the quadratic rational Bezier curves $\bar{r}_0$, $\bar{r}_1$, $\bar{r}_2$, $\bar{r}_3$ ... approximating the curve fitting the sequence of points $Q_0$, $Q_1$, $Q_2$, ... can be done by memorizing the control points $\bar{P}_0$, $\bar{P}_1$, $\bar{P}_2$ and the weight W for each quadratic rational Bezier curve $\bar{r}_0$, $\bar{r}_1$, $\bar{r}_2$, $\bar{r}_3$ ... .

However, as the control point $\bar{P}_1$ is the cross point of the tangent $\alpha$ and the tangent $\beta$, it may position far from the control point $\bar{P}_0$ or $\bar{P}_2$. In this case, the value of the point $\bar{P}_1$ is largely different from that of the control point $\bar{P}_0$ or $\bar{P}_2$. For this reason, the data structure in the memory 13 becomes complicated and the accuracy becomes low.

Then, under the relation shown in Fig. 6, the processor 12 computes the camber vector $\bar{b}_i$ of each quadratic rational Bezier curves $\bar{r}_i$ by using following equation:

$$\bar{b}_i = (\bar{P}_1 - (\bar{P}_0 + \bar{P}_2)/2)\, W/(1+W) \qquad (4)$$

Each quadratic rational Bezier curve $\bar{r}_0, \bar{r}_1, \bar{r}_2, \bar{r}_3, \ldots \bar{r}_x$ is memorized in the memory 13 by memorizing tangent $\alpha$ at the control point $\bar{P}_0$ of the first quadratic rational Bezier curve $\bar{r}_0$, the control point $\bar{P}_2$ of the last quadratic rational Bezier curve $\bar{r}_x$, the control point $\bar{P}_0$ of each quadratic rational Bezier curve $\bar{r}_0, \bar{r}_1, \bar{r}_2, \bar{r}_3, \ldots, \bar{r}_x$ and the camber vector $\bar{b}_0, \bar{b}_1, \bar{b}_2, \bar{b}_3, \ldots, \bar{b}_x$.

When the quadratic rational Bezier curve $\bar{r}_i$ is reconstructed from the memorized data, the control point $\bar{P}_2$ of the quadratic rational Bezier curve $\bar{r}_i$ is required. But, the control point $\bar{P}_0$ of the quadratic rational Bezier curve $\bar{r}_{i+1}$ can be used as the control point $\bar{P}_2$ of the quadratic rational Bezier curve $\bar{r}_i$. Therefore, only the control point $\bar{P}_2$ of the last quadratic rational Bezier curve should be memorized.

As understood from the above description, the system for generating approximate curves and the system for memorizing curves of this invention gives following effects.

1. Since the quadratic rational Bezier curves are used, conics can be expressed exactly. So, the diagram like a character font which is basically designed by using compass can be expressed exactly.

2. Since the quadratic rational Bezier curves can be analytically found, the computation becomes easy.

3. The range of the sequence of points which can be approximated by one curve segment can be found easily and accurately. In other words, the maximum range which can be approximated by one conic section is approximated by one curve segment.

4. Since the data to be memorized are similar values, the data structure becomes easy and a lowering of accuracy can be avoided.

5. Since an amount of the data to be memorized can be reduced. a small-capacity memory can be used and a time for data transmission can be shortened.

## Claims

1. An apparatus for generating an image comprising:

an input device (11) for inputting a sequence of points of an image;
a processor (12) for generating approximate curves fitting that sequence of points, comprising,

(a) an initial segment generating means which selects adjacent three points and finds a rational Bezier curve of degree two having as control points the two end points $(Q_0, Q_2)$ among the adjacent three points and the node of tangents at these two points and which transits the middle one point $(Q_1)$ of the three adjacent points;

characterised in that;

(i) the processor further comprises

(a) an approximate segment generating means which extends the rational Bezier curve of degree two, finds the outermost point to which distance from the curve is within a predetermined allowance value $(\delta)$, finds a provisional rational Bezier curve of degree two which gives minimal total distance between each point until the outermost point and the curve, repeats said process to extend the rational Bezier curve of degree two and to find a new provisional rational Bezier curve of degree two, and then, finds a final rational Bezier curve of degree two which approximates the points until the outermost point to which distance from the curve is within the predetermined allowance value (5), and
(b) a repeat control means which repeats said initial segment generating step and said approximate segment generating step regarding to the remaining points and stops repeating when there is no remaining point; and

(ii) the apparatus further comprises

a memory (13) for memorizing curves by which rational Bezier curves of degree two from the first to the X-th being tangent-continuous thereof are memorized, said memory being arranged to

(a) memorize a tangent at a control point P10 which is one side end of the first rational Bezier curve of degree two,
(b) memorize a control point PX2 which is another side end of the X-th rational Bezier curve of degree two,
(c) memorize a control point Pi0 which is one side end of the i-th $(1 \leq i \leq X)$ rational Bezier curve of degree two, and
(d) memorize the following camber vector $\underline{b}i$,

$$\underline{b}i = (\underline{P}i1 - (\underline{P}i0 + \underline{P}i2)/2)\, Wi / (1 + Wi)$$

whereby, $\underline{P}i1$ is a control point of a node of tangents at $\underline{P}i0$ and $\underline{P}i2$, Wi is the weight of i-th rational Bezier curve of degree two; and

an output device (14) for outputting the image.

2. A method of generating an image comprising:

inputting a sequence of points of an image; generating approximate curves fitting that sequence of points, by

(a) selecting (101, 102) adjacent three points and finding (103) a rational Bezier curve of degree two having as control points the two end points $(Q_0, Q_2)$ among the adjacent three points and the node of tangents at these two points and which transits the middle one point of the three adjacent points $(Q_1)$;

characterised in that;

(i) said step of generating approximate curves includes

(a) extending (104) the rational Bezier curve of degree two, finding the outermost point to which distance from the curve is within a predetermined allowance value, finding a provisional rational Bezier curve of degree two which gives minimal total distance between each point until the outermost point and the curve, and repeating said process to extend the rational Bezier curve of degree two and to find a new provisional rational Bezier curve of degree two, and then, finding a final rational Bezier curve of degree two which approximates the points until the outermost point to which distance from the curve is within the predetermined allowance value, and

(b) repeating said initial segment generating step and said approximate segment generating step regarding to the remaining points and stopping repeating when there is no remaining point; and

(ii) the method further includes memorizing curves by which rational Bezier curves of degree two from the first to the X-th being tangent-continuous thereof are memorized by

(a) memorizing a tangent at a control point P10 which is one side end of the first rational Bezier curve of degree two,

(b) memorizing a control point PX2 which is another side end of the X-th rational Bezier curve of degree two,

(c) memorizing a control point Pi0 which is one side end of the i-th $(1 \leq i \leq X)$ rational Bezier curve of degree two, and

(d) memorizing following camber vector $\underline{bi}$,

$$\underline{bi} = (\underline{Pi1} - (\underline{Pi0} + \underline{Pi2}) /2) \, Wi / (1 + Wi)$$

whereby, $\underline{Pi1}$ is a control point of a node of tangents at $\underline{Pi0}$ and $\underline{Pi2}$, Wi is the weight of i-th rational Bezier curve of degree two; and outputting the image.

**Patentansprüche**

1. Bilderzeugungsvorrichtung, umfassend:

eine Eingabevorrichtung (11) zur Eingabe einer Abfolge an Punkten bzw. Punktfolge eines Bildes;

einen Prozessor (12) zur Erzeugung von Näherungskurven, die mit dieser Punktabfolge bzw. Punktfolge übereinstimmen, umfassend:

(a) ein Anfangssegmenterzeugungsmittel, das benachbarte drei Punkte auswählt und eine rationale Bezierkurve zweiten Grades findet, die als Regelpunkte die zwei Endpunkte $(Q_0, Q_2)$ unter den benachbarten drei Punkten und den Knoten von Tangenten an diese zwei Punkte aufweist und durch den mittleren einen Punkte $(Q_1)$ der drei benachbarten Punkte verläuft;

dadurch gekennzeichnet, daß:

(i) der Prozessor weiters umfaßt:

(a) ein Näherungssegmenterzeugungsmittel, das die rationale Bezierkurve zweiten Grades verlängert, den äußersten Punkt findet, bis zu dem der Abstand von der Kurve innerhalb eines vorbestimmten Toleranzwerts $(\delta)$ liegt, eine provisorische rationale Bezierkurve zweiten Grades findet, die einen minimalen Gesamtabstand zwischen jedem Punkt bis zum äußersten Punkt und zur Kurve ergibt, den Vorgang wiederholt, um die rationale Bezierkurve zweiten Grades zu verlängern und eine neue provisorische rationale Bezierkurve zweiten Grades zu finden, und dann eine letzte rationale Bezierkurve zweiten Grades findet, die sich den Punkten bis zum äußersten Punkt annähert, bis zu dem der Abstand von der Kurve innerhalb des vorbestimmten Toleranzwerts ($\delta$) liegt, und

(b) ein Wiederholungsregelmittel, das den anfänglichen Segmenterzeugungsschritt und den Annäherungssegmenterzeugungsschritt betreffend die verbleibenden Punkte wiederholt und anhält, wenn es keinen verbleibenden Punkt mehr gibt; und

(ii) die Vorrichtung weiters umfaßt:

einen Speicher (13) zum Speichern von Kurven, durch den rationale Bezierkurven zweiten Grades von der ersten bis zur X-ten, die tangentenkontinuierlich davon sind, gespeichert werden, wobei der Speicher ausgebildet ist,

(a) eine Tangente an einem Regelpunkt P10 zu speichern, der ein Seitenende der ersten rationalen Bezierkurve zweiten Grades ist,

(b) einen Regelpunkt PX2 zu speichern, der ein weiteres Seitenende der X-ten rationalen Bezierkurve zweiten Grades ist,

(c) einen Regelpunkt PiO zu speichern, der ein Seitenende der i-ten ($1 \leq i \leq X$) rationalen Bezierkurve zweiten Grades ist,

(d) den folgenden Krümmungsvektor $\underline{b}i$ zu speichern:

$$\underline{b}i = (\underline{P}i1 - (\underline{P}iO + \underline{P}i2)/2)\, Wi\, /\, (1 + Wi)$$

worin $\underline{P}i1$ ein Regelpunkt eines Knotens von Tangenten an $\underline{P}iO$ und $\underline{P}i2$ ist und Wi das Gewicht der i-ten rationalen Bezierkurve zweiten Grades ist; und

eine Ausgabevorrichtung (14) zum Ausgeben des Bildes.

2. Bilderzeugungsverfahren, umfassend:

Eingeben einer Abfolge an Punkten bzw. Punktfolge eines Bildes;

Erzeugen von Näherungskurven, die dieser Punktabfolge bzw. Punktfolge entsprechen, durch:

(a) Auswählen (101, 102) benachbarter dreier Punkte und Finden (103) einer rationalen Bezierkurve zweiten Grades, die als Regelpunkte die zwei Endpunkte ($Q_0$, $Q_2$) unter den benachbarten drei Punkten und den Knoten von Tangenten an diese zwei Punkte aufweist und durch den mittleren einen Punkt der drei benachbarten Punkte ($Q_1$) verläuft;

dadurch gekennzeichnet, daß:

(i) der Schritt des Erzeugens von Näherungskurven folgendes umfaßt:

(a) Verlängern (104) der rationalen Bezierkurve zweiten Grades, Finden des äußersten Punktes, bis zu dem der Abstand von der Kurve innerhalb eines vorbestimmten Toleranzwertes liegt, Finden einer provisorischen rationalen Bezierkurve zweiten Grades, die den minimalen Gesamtabstand zwischen jedem Punkt bis zum äußersten Punkt und zur Kurve ergibt, und Wiederholen des Vorgangs, um die rationale Bezierkurve zweiten Grades zu verlängern und eine neue provisorische rationale Bezierkuve zweiten Grades zu finden, und anschließend das Finden einer letzten rationalen Bezierkurve zweiten Grades, die sich den Punkten bis zum äußersten Punkt nähert, bis zu dem der Abstand von der Kurve innerhalb des vorbestimmten Toleranzwertes liegt, und

(b) Wiederholen des anfänglichen Segmenterzeugungsschritts und des Annäherungssegmenterzeugungsschritts betreffend die übrigen Punkte und Stoppen des Wiederholvorgangs, wenn es keine übrigen Punkte mehr gibt; und

(ii) das Verfahren weiters das Speichern von Kurven umfaßt, wodurch rationale Bezierkurven zweiten Grades von der ersten bis zur X-ten, die tangentenkontinuierlich davon sind, durch folgende Schritte gespeichert werden:

(a) Speichern einer Tangente an einem Regelpunkt P10, der ein Seitenende der ersten rationalen Bezierkurve zweiten Grades ist,

(b) Speichern eines Regelpunkts PX2, der ein anderes Seitenende der X-ten rationalen Bezierkurve zweiten Grades ist,

(c) Speichern eines Regelpunkts PiO, der ein Seitenende der i-ten ($1 \leq i \leq X$) rationalen

Bezierkurve zweiten Grades ist,

(d) Speichern des folgenden Krümmungs-vektors $\underline{b}i$:

$$\underline{b}i = (\underline{P}i1 - (\underline{P}iO + \underline{P}i2)/2)Wi/(1 + Wi)$$

worin $\underline{P}i1$ ein Regelpunkt eines Knotens von Tangenten an $\underline{P}iO$ und $\underline{P}i2$ ist und Wi das Gewicht der i-ten rationalen Bezierkurve zweiten Grades ist; und

Ausgeben des Bildes.

## Revendications

1. Appareil pour produire une image comprenant :

un dispositif d'entrée (11) pour produire une séquence de points d'une image;

un processeur (12) pour produire des courbes d'approximation se rapportant à cette séquence de points, comprenant,

(a) un moyen de production de segment initial qui choisit trois points adjacents et trouve une courbe rationnelle de Bezier de degré deux ayant comme points de contrôle les deux points extrêmes (Qo, Q2) parmi les trois points adjacents et le noeud de tangentes de ces deux points et qui transite le point milieu (Q1) des trois points adjacents;

caractérisé en ce que;

(i) le processeur comprend de plus

(a) un moyen de production de segment d'approximation qui étend la courbe de Bezier rationnelle de degré deux, trouve le point le plus externe auquel une distance de la courbe se trouve dans une valeur d'autorisation prédéterminée (δ), trouve une courbe de Bezier rationnelle provisoire de degré deux qui donne une distance totale minimale entre chaque point jusqu'au point le plus externe de la courbe, répète ledit processus pour étendre la courbe de Bezier rationnelle de degré deux et pour trouver une nouvelle courbe de Bezier rationnelle provisoire de degré deux, et ensuite, trouve une courbe de Bezier rationnelle finale de degré deux qui approche les points jusqu'au point le plus externe auquel une distance de la courbe se trouve dans la valeur d'autorisation prédéterminée (δ), et

(b) un moyen de commande de répétition qui répète ladite étape de production de segment initial et ladite étape de production de segment d'approximation en considérant les points restants et arrête la répétition lorsqu'il n'y aucun point restant; et

(ii) l'appareil comprend de plus

une mémoire (13) pour mémoriser des courbes par lesquelles les courbes de Bezier rationnelles de degré deux de la première à la X-ième étant des tangentes continues de celles-ci sont mémorisées, ladite mémoire étant agencée pour

(a) mémoriser une tangente à un point de contrôle P10 qui est une extrémité latérale de la première courbe de Bezier rationnelle de degré deux,
(b) mémoriser un point de contrôle PX2 qui est une autre extrémité latérale de la X-ième courbe de Bezier rationnelle de degré deux,
(c) mémoriser un point de contrôle PiO qui est une extrémité latérale de la i-ième ($1 \leq i \leq X$) courbe de Bezier rationnel de degré deux, et
(d) mémoriser le vecteur de courbure suivant $\underline{b}i$,

$$\underline{b}i = (\underline{P}i1 - (\underline{P}iO + \underline{P}i2) /2) Wi / (1 + Wi)$$

de la sorte, $\underline{P}i1$ est un point de contrôle d'un noeud de tangentes à $\underline{P}iO$ et $\underline{P}i2$, Wi est le poids de la i-ième courbe de Bezier rationnelle de degré deux; et
un dispositif de sortie (14) pour produire l'image.

2. Procédé de production d'une image comprenant :

entrer une séquence de points d'une image;

produire des courbes d'approximation se rapportant à cette séquence de points, en

(a) sélectionnant (101, 102) trois points adjacents et trouvant (103) une courbe de Bezier rationnelle de degré deux ayant comme points de contrôle les deux points extrêmes (Qo, Q2) parmi les trois points adjacents et le noeud de tangentes à ces deux points et qui transite le point milieu des trois points adjacents (Q1);

caractérisé en ce que;

(i) ladite étape de produire des courbes d'approximation comprend

(a) étendre (104) la courbe de Bezier rationnelle de degré deux, trouver le point le plus externe auquel une distance de la courbe se trouve dans une valeur d'autorisation prédéterminée, trouver une courbe de Bezier rationnelle provisoire de degré deux qui donne une distance totale minimale entre chaque point jusqu'au point le plus externe de la courbe et répéter ledit processus pour étendre la courbe de Bezier rationnelle de degré deux et pour trouver une nouvelle courbe de Bezier rationnelle provisoire de degré deux, et ensuite, trouver une courbe de Bezier rationnelle finale de degré deux qui approche les points jusqu'au point le plus externe auquel une distance de la courbe se trouve dans la valeur d'autorisation prédéterminée, et

(b) répéter ladite étape de production de segment initial et ladite étape de production de segment d'approximation en considérant les points restants et arrêter la répétition lorsqu'il n'y a aucun point restant; et

(ii) le procédé comprend de plus mémoriser des courbes par lesquelles des courbes de Bezier rationnelles de degré deux de la première à la X-ième étant les tangentes continues de celles-ci sont mémorisées en

(a) mémorisant une tangente à un point de contrôle P10 qui est une extrémité latérale de la première courbe de Bezier rationnelle de degré deux,
(b) mémorisant un point de contrôle PX2 qui est une autre extrémité latérale de la X-ième courbe de Bezier rationnelle de degré deux,
(c) mémorisant un point de contrôle PiO qui est une extrémité latérale de la i-ième ($1 \leq i \leq X$) courbe de Bezier rationnelle de degré deux, et
(d) mémorisant un vecteur de courbure suivant $\underline{b}i$,

$$\underline{b}i = (\underline{P}i1 - (\underline{P}iO + \underline{P}i2)/2) Wi / (1 + Wi)$$

de la sorte, $\underline{P}i1$ est un point de contrôle d'un noeud de tangente à $\underline{P}iO$ et $\underline{P}i2$, Wi est le poids de la i-ième courbe de Bezier rationnelle de degré deux; et

produire l'image.

# FIG. IA

```
        START                              ②
          │                                 │
          ▼                                 ▼
      ┌─────────┐                      ┌─────────┐
      │  i = O  │                      │  i = j  │
      └─────────┘                      └─────────┘
          │                                 │
          │◄────────────────────────────────┘
          ▼
      ┌─────────┐
      │ j = i+2 │
      └─────────┘
          │
          ▼
  ┌─────────────────────────┐
  │  P̄o ◄─ Qi , P̄2 ◄─ Qj    │ ∿IOI
  └─────────────────────────┘
          │
          ▼
  ┌───────────────────────────────────┐
  │ OBTAIN THE TANGENT α ON P̄o.        │
  │ OBTAIN THE TANGENT β ON P̄2.        │ ∿IO2
  │ SET P1 AS CROSSPOINT  OF           │
  │ TANGENT α  AND TANGENT β           │
  └───────────────────────────────────┘
          │
          ▼
  ┌───────────────────────────────────┐
  │ SUBSTITUTE P̄o, P̄1, P̄2, FIND W     │
  │  OF  THE  CURVE                    │ ∿IO3
  │ TRANSITTING  POINT Qi+1.           │
  └───────────────────────────────────┘
          │
  ③ ──────┤
          ▼
        ╱──────────────╲
       ╱                ╲
      ◄  Qj+1: EXIST ?   ►──── YES ──► ①
       ╲                ╱
        ╲──────────────╱
          │ NO
          ▼
        ┌─────────┐
        │  END    │
        └─────────┘
```

# FIG. 1B

EXTEND THE CURVE ~104

m = j

OBTAIN DISTANCE d BETWEEN THE POINT $Q_{j+1}$ AND THE CURVE ~105

$d : \delta$ ~106

$j = j + 1$

$m = j$

$Q_{j+1}$ : EXIST ?

YES

NO

$\overline{P_2} \leftarrow Q_j$ ~107

102 STEP ~108

RECALCULATE W GIVING THE MINIMUM DISTANCE BETWEEN EACH POINT (UNTILL $Q_j$) AND THE CURVE ~109

$Q_{j+2}$ : EXIST ?

YES

NO

$\overline{P_0} \leftarrow Q_j$, $\overline{P_2} \leftarrow Q_{j+1}$ ~110

102 STEP ~111

SUBSTITUTE $\overline{P_0}$, $\overline{P_1}$, $\overline{P_2}$ SET W = 1. ~112

END

# F I G. 2

# F I G. 3

# F I G. 4

# FIG. 5

# FIG. 6

$\overline{P}_1$

$1$

$Pn = \overline{r}_i(0.5, W)$

$\overline{r}_i(t, W)$

$\overline{P}_0$

$W$

$\overline{b}_i$

$\dfrac{\overline{P}_0 + \overline{P}_1}{2} = \overline{r}_i(0.5, 0)$

$\overline{P}_2$

# FIG. 7

10

14

MEMORY

PROCESSOR

OUTPUT DEVICE

INPUT DEVICE

13

12

11